# EUROPÄISCHE PATENTANMELDUNG

(11) **EP 1 260 642 A1**
(43) Veröffentlichungstag der Anmeldung: **27.11.2002**
(21) Anmeldenummer: 02011412.0
(22) Anmeldetag: 24.05.2002
(51) Int. Cl.: E04B 1/36

(54) **Unbewehrtes strukturiertes Elastomerlager zum flächigen Abstützen von Bauteilen und Bauwerken**

(30) Priorität: 25.05.2001 DE 10125841
(71) Anmelder: Baulagerservice Holling GmbH, 01987 Schwarzheide-West (DE)
(72) Erfinder: Holling, Rudi, 01987 Schwarzheide-West (DE)
(74) Vertreter: Haschick, Gerald

(57) **Zusammenfassung**

Die Erfindung betrifft ein unbewehrtes strukturiertes Elastomerlager zum flächigen Abstützen von Bauteilen und Bauwerken in belasteten Fugen in Form einer aus elastomerem Material, insbesondere Gummi oder gummiähnlichem Werkstoff, bestehenden elastisch verformbaren Platte, welche in der oberen und unteren Plattenebene entsprechende Strukturveränderungen aufweist.

## Beschreibung

Die Erfindung betrifft ein unbewehrtes strukturiertes Elastomerlager zum flächigen Abstützen von Bauteilen und Bauwerken in belasteten Fugen in Form einer aus elastomerem Material, insbesondere Gummi oder gummiähnlichem Werkstoff, bestehenden elastisch verformbaren Platte, welche in der oberen und unteren Plattenebene entsprechende Strukturveränderungen aufweist.

Zum Stand der Technik sind diverse Elastomerlager bekannt, welche nachfolgend aufgeführt werden. Elastomerlager der im Oberbegriff des Anspruches 1 genannten Art sind bekannt als profilartige Bänder und gelochte oder ein- und zweiseitig mit Noppen oder Vertiefungen geformte Plattenoberflächen. Durch DE 2901988C2 ist das Lager mit im Querschnitt dreieckförmigen Rippen, wobei die Rippen auf der einen Plattenseite ein Mehrfaches des Querschnittes der anderen Plattenseite aufweisen, bekannt. Die Weiterbildung dieser Ausführungsform liegt als Profil vor mit beidseitig angeordneter Zickzackform und Symmetrieebene in der Plattenmitte mit nach außen weisenden Rippen. Weitere profilartige Elastomerlager sind bekannt durch DE 2318649 mit beidseitig versetzt angeordnetem Trapezquerschnitt, OS 3144894 mit versetzt angeordneten Wellenbergen und hohlraumbildenden Kanälen, DE 3446831C1 als Profilleiste mit eigentümlicher Formgebung und hohlraumbildenden Kanälen, DE 9313217U1 als Lagerstreifen mit hohlraumbildenden Kanälen sowie ein Lager mit im Querschnitt parabelförmigen Rippen, wobei die Rippen auf der einen Plattenseite ein Mehrfaches des Querschnittes der anderen Plattenseite aufweisen. Mit DE 2517750, DE 3916718 sind Lagertypen bekannt mit gelochten Platten. Mit OS 3038919, OS 3306245, DE 2351551 sind Elastomerlager bekannt mit noppen- oder lammellenartigen Erhöhungen. Weiterhin bekannt ist ein Lager mit beidseitig angeordneten zylindrischen Noppen mit Kreisquerschnitt, wobei die Lagermittelebene Symmetrieebene ist. Bei den vorliegenden technischen Lösungen der Elastomerlager aus Profilen, gelochten oder genoppten Platten werden die geschaffenen Freiräume als Verdrängungsräume genutzt, in die das elastische Material in Abhängigkeit der Druckspannung günstigerweise ausweichen kann. Neben dem Ausgleich von Oberflächenrauhigkeiten und Planparallelitätsabweichungen werden in Abhängigkeit von der Formgebung und der Druckspannung sehr unterschiedliche Eigenfrequenzen, die maßgebend für den Körperschallschutz sind, festgestellt. Daraus resultiert die Eignung von Elastomerlagern, zum Beispiel für den Trittschallschutz. Mit Druckspannungserhöhung wird durch Verquetschung des Elastomerwerkstoffes in die Freiräume der Übergang zur homogenen Elastomerplatte vollzogen. Es tritt bei den profilierten Lagern typischerweise längs und quer zur Profilierung unterschiedliches Ausbreitungsverhalten und Schubverformungsverhalten auf, was bedingt als Nachteil gewertet wird. Bei den profilierten, gelochten oder genoppten Elastomerlagern tritt bei höheren Pressungen, zum Beispiel beim zum Schlitz zugesammengepressten hohlraumbildenden Kanal und bei den konstruktiv gewählten Kanten oder verquetschten Materialeinschnürungen, örtlich erhöhte Schubspannung auf.

Der Nachteil dieser benannten Elastomerlager anhand des Standes der Technik liegt darin begründet, dass an bestimmten innenliegenden Stellen der gedrückten Elastomerplatte die örtlichen Schubspannungsspitzen das elastische Verhalten des Elastomerwerkstoffes vermindern und damit Verhärtungen auftreten, die wegen der erhöhten Streifigkeit erhöhte Spannungsaufnahme bewirken, was zur Rissbildung führen kann.

Ziel der Erfindung ist es, ein unbewehrtes strukturiertes Elastomerlager zum flächigen Abstützen von Bauteilen und Bauwerken zu fertigen, wonach der Nachteil des Standes der Technik eingegrenzt und ein verbessertes Elastomerlager geschaffen wird.

Aufgabe der Erfindung ist es, ein unbewehrtes strukturiertes Elastomerlager zum flächigen Abstützen von Bauteilen und Bauwerken zu schaffen, wobei eine elastisch verformbare Platte in den oberen und unteren Plattenebenen mit Strukturveränderungen so ausgeführt ist, dass bei Druck- und bei Schubbeanspruchung ein isotropisches Verformungsverhalten stattfindet und durch die Formgebung der oberen und unteren Plattenebene die Schubspannungsspitzen an markanten Stellen weitestgehend ausgeschlossen werden.

Die Erfindung wird aufgabengemäß dadurch gelöst, dass der Patentanspruch 1 mit seinen Unteransprüchen ausgeführt wird.

Mit der gewählten Plattenstruktur des Elastomerlagers wird bei Anordnung zwischen zwei Bauteilen und bei flächiger Belastung die Druckstauchung mit dem Kontakt der quadratischen Kontaktflächen der Noppen eingeleitet. Auf Grund der versetzten Anordnung der Noppen zwischen der einen Plattenebene zur anderen Plattenebene wird die Wirkungsweise von Membranen erzielt. In der Druckstauchungsphase bis zur annähernden Stauchung zur homogen Platte liegen günstigerweise kleine Eigenfrequenzquoten vor, so dass gute Trittschallschutzwerte im größeren Druckspannungsbereich vorliegen. Bei größeren Druckspannungsquoten geht die Verhaltensweise des Lagers über zur Wirkung, wie bei der kompakten Platte. Es liegt Isotropie vor, hinsichtlich Ausbreitungsverhalten und Schubverformungswiderstand. Auf Grund der kantenlosen, konstruktiven Durchbildung werden Spannungsspitzen beim Druckstauchungsprozess besser vermieden als bei den bekannten Elastomerlagern.

Anhand eines Ausführungsbeispieles soll die technische Lösung erläutert werden. Beim Einsatz für die trittschallschutzgemäße Entkopplung wird das Elastomerlager 1 zwischen zwei Bauwerksteile angeordnet und im wesentlichen flächig mit kleinen Druckspannungen belastet. So kommen bei geringen Auflagerkräften zunächst die ebenen Noppenoberflächen der Noppen 2 der oberen und unteren Plattenebene 3 und 3' zur Auflage, so dass zwischen vier Noppen 2 mit dem dazwischenliegenden Ausnehmungsmittelpunkt 6 der einen Plattenebene 3 und 3' die zugeordnete Noppe 2 der anderen Plattenebene 3' membranartig einfedert und gestaucht wird. Bei zunehmender Belastung werden die verbliebenen Freiräume mit Elastomermaterial ausgefüllt bis zum Verformungsverhalten des homogenen Elastomerlagers 1.

### Bezugszeichen

- 1: Elastomerlager
- 2: Noppe
- 3: Plattenebene
- 3': Plattenebene
- 4: Platte
- 5: Noppenmitte
- 6: Ausnehmungsmittelpunkt
- 7: Bezier-Spline-Kurve
- 8: Blendingfläche bei Kante zu 6
- 9: Blendingfläche bei Stützflächenkante

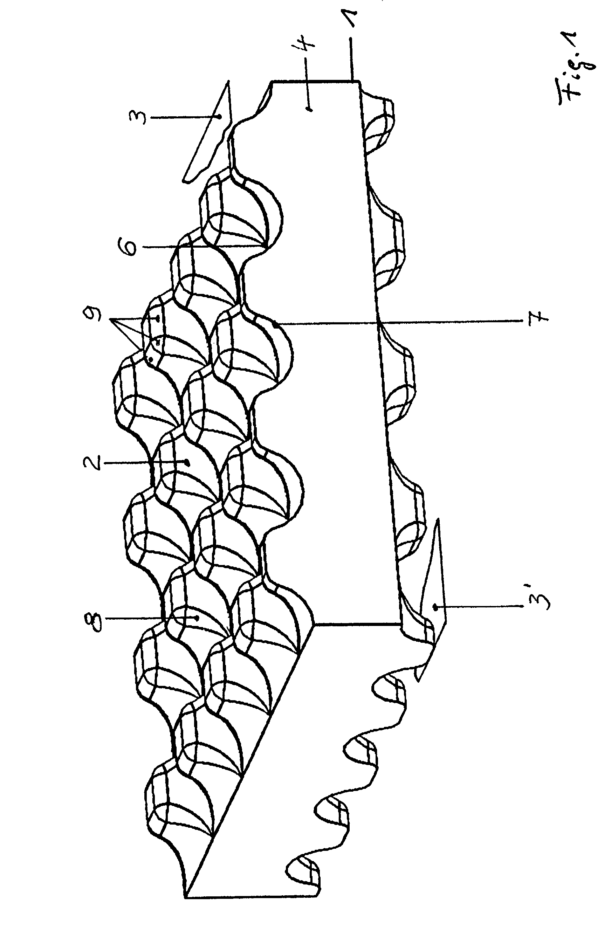

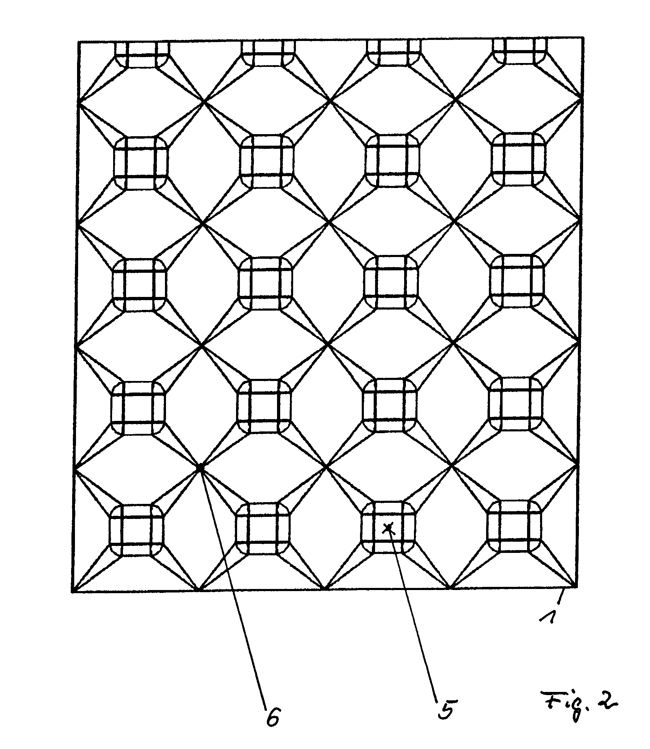

## Patentansprüche

1. Unbewehrtes strukturiertes Elastomerlager zum flächigen Abstützen von Bauteilen und Bauwerken in Form einer elastisch verformbaren Platte (4) mit bestehenden Oberflächenveränderungen der oberen und unteren Plattenebene (3 und 3') **dadurch gekennzeichnet, dass** die beiden Plattenebenen (3 und 3') Noppen (2) aufweisen, die regelmäßig angeordnet sind und von einer Außenkante der Kontaktfläche bis zum zwischen den Noppen befindlichen Ausnehmungsmittelpunkt (6) eine Kante verläuft, wobei die Noppenmitte (5) einer Noppe (2) einer Plattenebene (3 und 3') gegenüber dem Ausnehmungsmittelpunkt (6) der gegenüber liegenden Plattenebene (3 und 3') angeordnet ist.

2. Elastomerlager nach Anspruch 1 **dadurch gekennzeichnet, dass** die Noppen (2) gebildet werden durch Ausnehmungen in beiden Plattenebenen (3 und 3'), die zylinderförmig arraygemäß und orthogonal zueinander angeordnet sind mit dem Ausnehmungsquerschnitt, der mit einer kubischen Bezier-Spline-Kurve (7) beschreibbar ist.

3. Elastomerlager nach Anspruch 1 **dadurch gekennzeichnet, dass** die Platte (4) aus einem elastomeren Material, vorzugsweise Gummi oder gummiähnlichem Werkstoff, besteht.

4. Elastomerlager nach Anspruch 1 **dadurch gekennzeichnet, dass** die Noppen (2) der Plattenebene (3 und 3') eine quadratische Kontaktfläche aufweisen und von der Quadratecke bis zum Ausnehmungsmittelpunkt (6) die Kante vorhanden ist.

5. Elastomerlager nach den Ansprüchen 1 und 3 **dadurch gekennzeichnet, dass** die Kante der quadratischen Kontaktfläche mittels Blendingfläche (9) geglättet ist.

6. Elastomerlager nach Anspruch 1 **dadurch gekennzeichnet, dass** die Kante zwischen Quadratecke der Kontaktfläche und dem Ausnehmungsmittelpunkt (6) mittels Blendingfläche (8) geglättet ist.
